# EUROPEAN PATENT SPECIFICATION

(11) **EP 2 253 501 B1**
(45) Date of publication and mention of the grant of the patent: **03.07.2013**
(21) Application number: 10158426.6
(22) Date of filing: 30.03.2010
(51) Int. Cl.: B60N 2/02, B60N 2/06

(54) **Screw configuration of seat apparatus for vehicle**
Schraubenzusammensetzung für eine Sitzvorrichtung für ein Fahrzeug
Configuration de vis d'appareil de siège pour véhicule

(30) Priority: 15.05.2009 JP 2009118303
(43) Date of publication of application: 24.11.2010
(73) Proprietor: AISIN SEIKI KABUSHIKI KAISHA, Kariya-shi, Aichi-ken 448-8650 (JP)
(72) Inventor: Koga, Yoshitaka, KARIYA-SHI, AICHI-KEN 448-8650 (JP); Suzumura, Hirokazu, KARIYA-SHI, AICHI-KEN 448-8650 (JP); Shimizu, Jueru, KARIYA-SHI, AICHI-KEN 448-8650 (JP); Tatewaki, Kenji, KARIYA-SHI, AICHI-KEN 448-8650 (JP)
(74) Representative: Intès, Didier Gérard André

(56) References cited:
- EP-A2- 1 905 639
- DE-A1- 3 502 345
- DE-A1- 19 944 690
- GB-A- 2 193 629

## Description

### TECHNICAL FIELD

This disclosure relates to a screw configuration of a seat apparatus for a vehicle.

### BACKGROUND DISCUSSION

According to a known seat for a vehicle, lower rails are fixed to a vehicle floor, upper rails are supported at corresponding lower rails so as to be movable in a front-rear direction of the vehicle, and a seat member is fixed at the upper rails. Further, each lead screw is arranged between each of the lower rails and each of the upper rails. A power seat for vehicles, disclosed in US6244660B1, includes the lead screws, axially supported at the upper rails, respectively, nut members, through which the lead screws are respectively inserted, gear boxes, held at the corresponding upper rails and connected to one end of each of the lead screws, and a motor whose driving force is transmitted to the lead screws via the gear boxes. When the motor is rotated, the lead screws are rotated, thereby the upper rails slide relative to the corresponding lower rails in the front-rear direction of the vehicle. In a case where a vehicle is hit at a rear portion thereof and an excessive load is applied to the seat, a load may be applied to the gear boxes. Therefore, in order to restrict a damage of the gear boxes, a key groove portion is formed at a portion of each of the lead screws. A cutout portion of a bracket, connected to each of the upper rails, is engaged with the key groove portion so that a load may be received when an end surface of the bracket and an end surface of the key groove portion come in contact with each other. Accordingly, an application of an excessive load to the gear boxes may be restricted.

However, according to US6244660B1, in order to sufficiently receive a load by a contact between the bracket and the key groove portion, the key grove portion, having a sufficient depth, may be required to be formed at each of the lead screws. In this structure, because a depth of the key groove portion is set to be deep, a diameter of the key groove portion may be set to be smallest in the lead screw, in other words, the key groove portion may be the weakest portion in the lead screw. In order to obtain a sufficient strength of the lead screw, an increased diameter of the lead screw may be required to be obtained, which may cause an increased weight.

A need thus exists for a screw configuration of a seat apparatus for a vehicle for receiving a large load in a simple configuration with a decreased weight.

### SUMMARY

A screw configuration of a seat apparatus for a vehicle according to the present invention is defined by claim 1. According to an aspect of this disclosure, a screw configuration of a seat apparatus for a vehicle includes a screw member axially rotatably supported at one of a lower rail adapted to be mounted on a floor of the vehicle and an upper rail slidably supported at the lower rail and adapted to support a seat for the vehicle, extending in a sliding direction of the upper rail, including a protruding portion configured by two raised portions formed to be raised at an outer circumferential surface of the screw member from both sides in an axial direction of the screw member by cold rolling so as to be coupled and to contact each other, and positioned in the axial direction of the screw member by means of the protruding portion, and a transmitting nut member fixed to the other one of the lower rail and the upper rail so that the screw member is screwed through the transmitting nut member.

Accordingly, the raised portions, serving as the protruding portion, are formed at the outer circumferential surface of the screw member integrally therewith so as to be coupled and so as to contact each other. Thus, the protruding portion for determining the position of the screw member is formed in a simple configuration. Therefore, a manufacturing cost may be reduced. Further, the protruding portion is formed by cold rolling. Therefore, the screw member may not be deformed and strength of the screw shaft may not be reduced due to heating. Accordingly, the screw member may sufficiently tolerate an axial-direction force, applied to the screw shaft, whose position in the axial direction is determined by means of the protruding portion.

According to another aspect of this disclosure, the screw configuration of the seat apparatus for the vehicle is mounted on the seat apparatus for the vehicle including a holding member fixed to the upper rail, and an engagement member rotatably held by the holding member. The transmitting nut member is fixed to the lower rail. The engagement member is fixed to the screw member in a state where the screw member is positioned in the axial direction at a position where the protruding portion contacts an end surface of the engagement member.

Accordingly, the screw member is screwed through the transmitting nut member, fixed to the lower rail. The engagement member, fixed at the screw member, contacts the protruding portion, formed to be raised from the screw member, and is supported at a position between the holding member, fixed to the upper rail, and the protruding portion. Loads may be applied to the engagement member from the holding member, which is fixed to the upper rail for supporting the vehicle seat. The loads are transmitted to the protruding portion of the screw member via the holding member and the engagement member. However, the raised portions (the protruding portion) are formed to be integrally coupled. Therefore, the raised portions (the protruding portion) include a large modulus of section relative to the shear stress in the axial direction of the screw member. Accordingly, a load receiving portion for receiving a large load may be provided in a simple configuration without adding an additional component.

According to a further aspect of this disclosure, the screw member includes a transmitting screw portion formed at one side of the two raised portions by cold rolling and screwed through the transmitting nut member, and a fixing screw portion formed at the other side of the two raised portions by cold rolling and screwed through a nut member for thrusting the engagement member to contact the protruding portion.

Accordingly, according to the embodiment, the protruding portion (the first and second raised portions, the third and fourth raised portions), the transmitting screw portion, which is formed at one side of the protruding portion and screwed through the transmitting nut member, and the fixing screw portion, which is formed at the other side of the protruding portion and screwed thorough the fastening nut for thrusting the engagement member to contact the protruding portion, are formed by cold rolling. Accordingly, a plurality of main portions of the screw member may be formed in a series of processes, thereby reducing a cost for manufacturing.

According to a further aspect of this disclosure, a diameter of recessed portions, formed at both sides of the two raised portions so as to raise the two raised portions by cold rolling, is set to be equal to or larger than a root diameter of the transmitting screw portion, formed at the screw member by cold rolling.

Accordingly, the diameter of the first recessed portions, formed at both sides of the raised portions, respectively, is set to be equal to or larger than the root diameter of the transmitting screw portion, formed at the screw member. Therefore, a diameter of a portion, applied with a large stress (corresponding to a known key groove portion) is not set to be smaller than the root diameter of the transmitting screw portion. Therefore, strength of the screw member may be sufficiently obtained while a weight of the screw member may be reduced.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a side view illustrating a vehicle seat having a seat slide apparatus according to an embodiment;

Fig. 2 is an exploded perspective view illustrating the seat slide apparatus according to the embodiment;

Fig. 3 is a cross-sectional view taken along line III-III in Fig. 1;

Fig. 4 is a partial cross-sectional view of the seat slide apparatus taken along an axial direction of a screw shaft;

Fig. 5 is an enlarged cross-sectional view illustrating a main portion of Fig. 4; and

Fig. 6 is an exploded cross-sectional view illustrating a main portion of the seat slide apparatus according to the embodiment.

### DETAILED DESCRIPTION

An embodiment of a screw configuration of a seat apparatus 10 for a vehicle (which will be referred to as a seat apparatus 10 hereinafter) will be described hereinafter with reference to the attached drawings. According to the embodiment, directions such as right, left, front, rear, upper and lower respectively correspond to right, left, front, rear, upper and lower when seen by an occupant seated on the vehicle seat. The seat apparatus 10 is mounted on a vehicle floor 11, The seat apparatus 10 includes a seat slide apparatus 12, a seat cushion 13 for configuring a seat surface, and a seat back 14 for configuring a seat back surface. The seat back 14 is attached to a rear portion of the seat cushion 13 so as to be pivotable in a front-rear direction of the vehicle relative to the seat cushion 13 by means of known reclining mechanisms and to be held by the seat cushion 13 at a predetermined adjusted angle relative to the seat cushion 13.

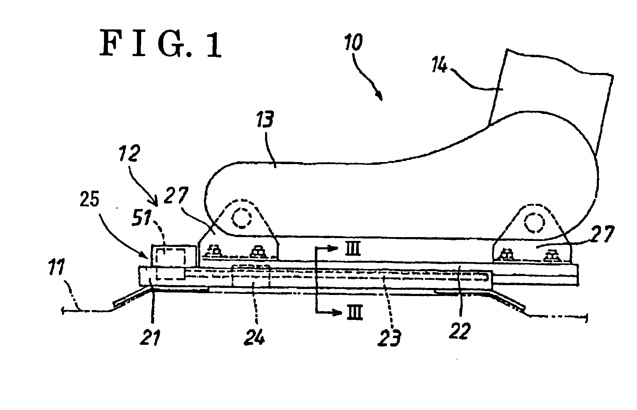

As illustrated in Fig. 1, the seat slide apparatus 12 includes lower rails 21, upper rails 22, screw shafts (screw members) 23, transmitting nut members 24 and a driving unit 25. Structures and functions of a left side and a right side of the seat apparatus 10 are substantially the same. Therefore, only one side of the seat apparatus 10 will be mainly described hereinafter.

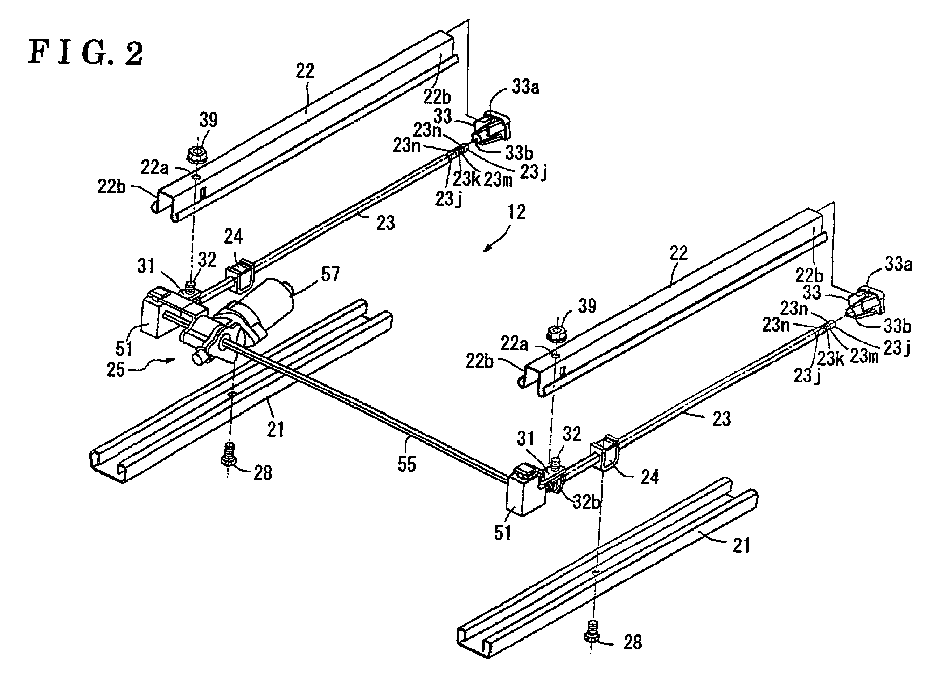

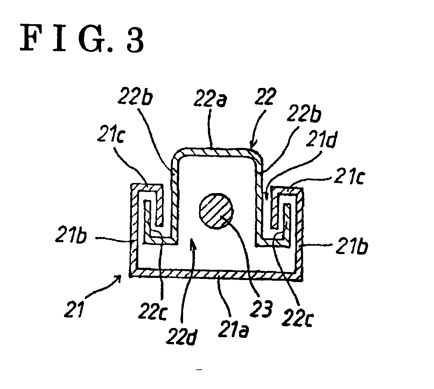

As illustrated in Figs. 1 and 2, the lower rail 21 is formed into a longitudinal shape, extending in the front-rear direction of the vehicle. The lower rails 21 are respectively provided to left and right sides of the seat apparatus 10 in parallel with each other. As illustrated in Fig. 3, the lower rail 21 includes a bottom wall 21 a, a pair of side walls 21 b extending in an upper direction from left and right end portions of the bottom wall 21 a, and a pair of first flange walls 21 c bent at upper end portions of the corresponding side walls 21 b in an inner direction of the lower rail 21 and then extended in a lower direction. The lower rail 21 includes an opening portion 21d, whose upper end opens, between the pair of first flange walls 21c, thereby being formed into a substantially U shape when seen in a cross-sectional view taken in a left-right direction. The lower rail 21 is fixed to the vehicle floor 11 at front and rear end portions thereof by means of a fixing member, such as bolts and the like.

As illustrated in Figs. 1 and 2, the upper rail 22 is formed into a longitudinal shape, extending in the front-rear direction of the vehicle. The upper rails 22 are respectively provided to left and right sides of the seat apparatus 10 in parallel with each other. As illustrated in Fig. 3, the upper rail 22 includes an upper wall 22a, a pair of vertical walls 22b extending in the lower direction from left and right end portions of the upper wall 22a, and a pair of second flange walls 22c bent at lower end portions of the corresponding vertical walls 22b in an outer direction of the upper rail 22 and then extended in the upper direction. The upper rail 22 includes an opening portion 22d, whose lower end opens, between the pair of second flange walls 21 c, thereby being formed into a substantially inverted U shape when seen in a cross-sectional view taken in the left-right direction. The upper rail 22 is supported by the lower rail 21 so as to be slidable relative to the lower rail 21 by means of rollers. The upper rail 22 is fixed to the seat cushion 13 of the seat apparatus 10 at an upper portion of the upper rail 22 via a holding bracket 27 (see Fig. 1).

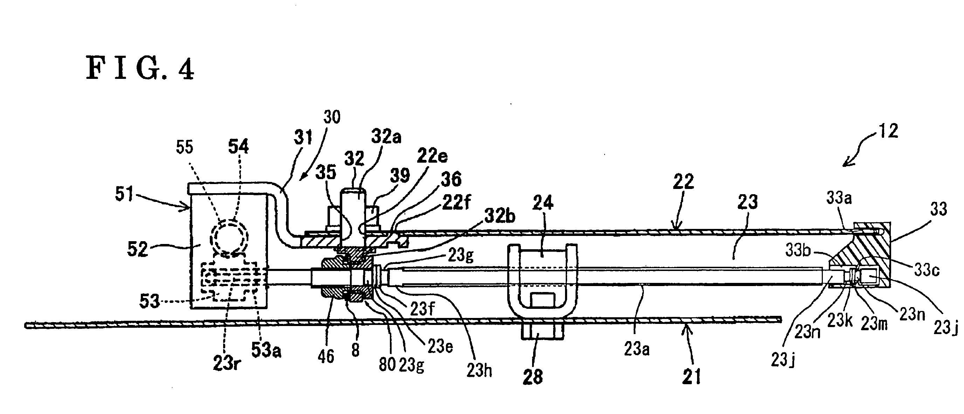

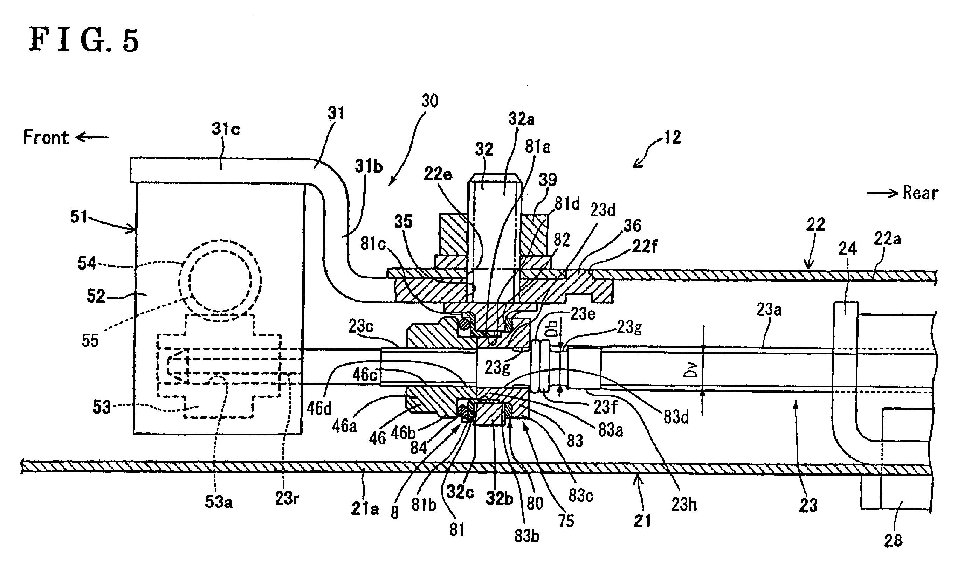

As illustrated in Figs. 4 and 5, the screw shaft 23 is arranged between the lower rail 21 and the upper rail 22 so that an axis of the screw shaft 23 extends in the front-rear direction of the vehicle. As illustrated in Fig. 5, the screw shaft 23 includes a transmitting screw portion (a lead screw) 23a, which is formed with a screw at a rear portion of the screw shaft 23 by cold rolling ("cold rolling" hereinafter refers to a rolling at a normal temperature) in a forward direction, and a fixing screw portion 23c, which is formed with a screw by cold rolling at a more front portion of the screw shaft 23 than the transmitting screw portion 23a.

An engagement portion 23d, which engages with an engagement body 83 (described later), is formed at an outer circumferential surface of the screw shaft 23 at a rear of the fixing screw portion 23c between the fixing screw portion 23c and the transmitting screw portion 23a. The engagement portion 23d is formed with a serration on a surface thereof by cold rolling. First and second raised portions (a protruding portion) 23e and 23f are formed at a rear of the engagement portion 23d. The protruding portion contacts a rear end surface of the engagement body 83, engaged with the engagement portion 23d, so as to determine a position of the screw shaft 23 in the axial direction thereof. First recessed portions 23g are formed at a front of the first raised portion 23e and at a rear of the second raised portion 23f, respectively. A first shaft portion 23h is formed between the first recessed portion 23g, formed at the rear of the second raised portion 23f, and the transmitting screw portion 23a. A diameter of the first shaft portion 23h is set to be substantially the same as a diameter of the engagement portion 23d. A spline engagement portion 23r, which is formed with a spline by cold rolling, is formed at a front of the fixing screw portion 23c and at a front end portion of the screw shaft 23. A diameter of the spline engagement portion 23r is set to be smaller than the diameter of the engagement portion 23d. Further, the serration may not have to be formed at the engagement portion 23d.

The first and second raised portions 23e and 23f, which serve as the protruding portion, will be described hereinafter. The first raised portion 23e, which is provided at the front of the second raised portion 23f, and the second raised portion 23f, which is provided at the rear of the first raised portion 23e, are formed at the screw shaft 23 integrally therewith by cold rolling so as to be raised in a protruding manner and so as to be coupled and to contact each other. More specifically, an outer circumferential portion of the screw shaft 23 is plastically deformed in a manner where a cold rolling die is applied to the screw shaft 23 so as to gather the outer circumferential portion of the screw shaft 23 to be raised from front and rear sides thereof in the axial direction toward portions to be formed with the first and second raised portions 23e and 23f while the screw shaft 23 is rotated by the cold rolling die, thereby forming the first and second raised portions 23e and 23f so as to be coupled and so as to contact each other in the axial direction. A raised height (a diameter) of the first and second raised portions 23e and 23f is set according to a diameter of the rear end surface of the engagement body 83, whose position is determined so as to contact a front end surface of the first raised portion 23e. The diameter of the first and second raised portions 23e and 23f is set to be larger than that of the engagement portion 23d and the first shaft portion 23h of the screw shaft 23.

When the cold rolling die is applied to the screw shaft 23 so as to gather the outer circumferential portion of the screw shaft 23 to be raised from front and rear sides thereof in the axial direction toward the portions to be formed with the first and second raised portions 23e and 23f, the first recessed portions 23g are formed at the portions, to which the cold rolling die is applied. A diameter Db of a bottom surface portion of the first recessed portions 23g is set to be equal to or larger than a root diameter Dv of the transmitting screw portion 23a, which is formed at the screw shaft 23, so that the diameter of the first recessed portions 23g is not set to be the smallest in the screw shaft 23 (the first recessed portions 23g may not be a weakest portion in the screw shaft 23).

As illustrated in Fig. 4, a second shaft portion 23j is formed at the rear end portion of the screw shaft 23. A diameter of the second shaft portion 23j is set to be substantially the same as the diameter of the first shaft portion 23h. Third and fourth raised portions (a protruding portion) 23k and 23m are formed at a substantially intermediate portion of the second shaft portion 23j in the axial direction of the screw shaft 23. The third and fourth raised portions 23k and 23m determine a position of a bearing 33 for axially rotatably supporting the screw shaft 23. Second recessed portions 23n are formed at a front of the third raised portion 23k and a rear of the fourth raised portion 23m, respectively. Similar to the first and second raised portions 23e and 23f, the third and fourth raised portions 23k and 23m are formed at the screw shaft 23 integrally therewith by cold rolling so as to be raised in a protruding manner and so as to be coupled and so as to contact each other. Further, the second recessed portions 23n are formed in a similar manner as the first recessed portions 23g.

The front and rear portions of the screw shaft 23 are supported at the upper rail 22 so as to be only rotatable relative to the upper rail 22. When the screw shaft 23 rotates, the upper rail 22 moves together with the screw shaft 23 so as to slide relative to the lower rail 21 in the front-rear direction. A description of a configuration where the screw shaft 23 is supported at the upper rail 22 and a detailed configuration of the driving unit 25 will be provided hereinafter.

As illustrated in Figs. 4 and 5, a holding bracket 31 is fixed to the front portion of the upper rail 22 by means of a first bolt 32. A rear end portion of the upper wall 22a of the upper rail 22 is inserted into and fixed at an engagement hole 33a, which is formed at the bearing 33, made of resin.

The transmitting screw portion 23a of the screw shaft 23 is screwed into the transmitting nut member 24, which is fixed to the bottom surface of the lower rail 21 by means of a second bolt 28. Further, an engagement member 75 is fixed to the fixing screw portion 23c, serving as a fastening screw member, by means of a fastening nut (a nut member) 46, which also serves as the engagement member 75.

The holding bracket 31 is formed into a substantially plate shape. A first bolt hole 35, through which a first leg portion 32a of the first bolt 32 is screwed, is formed at a rear portion of the holding bracket 31 in the front-rear direction, and a positioning protrusion 36 is formed at a rear end portion of the holding bracket 31. A second bolt hole 22e, through which the first leg portion 32a of the first bolt 32 is screwed, and a positioning hole 22f, which engages with the positioning protrusion 36, are formed at a front end portion of the upper wall 22a of the upper rail 22. The first leg portion 32a of the first bolt 32 is screwed through the first bolt hole 35 of the holding bracket 31 and the second bolt hole 22e of the upper rail 22 in a state where the positioning protrusion 36 is engaged with the positioning hole 22f. Then a nut 39 is screwed onto the first leg portion 32a of the first bolt 32 so as to be fitted therearound. Consequently, a position of the holding bracket 31 relative to the upper rail 22 is determined and the holding bracket 31 is fixed to the upper rail 22 at the determined position. A holding member 30 for rotatably supporting the engagement member 75 is configured by the holding bracket 31 and the first bolt 32.

As illustrated in Fig. 5, a supporting portion 32b, protruding downwardly from the first bolt 32, is fixed at the holding bracket 31 integrally therewith, thereby serving as a portion of the holding bracket 31. Alternatively, the supporting portion 32b may be formed integrally with the holding bracket 31. The supporting portion 32b is arranged between the supporting bracket 31 and the lower rail 21. A bearing hole 32c, whose diameter is slightly larger than that of the screw shaft 23, is formed at the supporting portion 32b so that the screw shaft 23 is inserted through the bearing hole 23c via an intermediate member 8 and the engagement member 75.

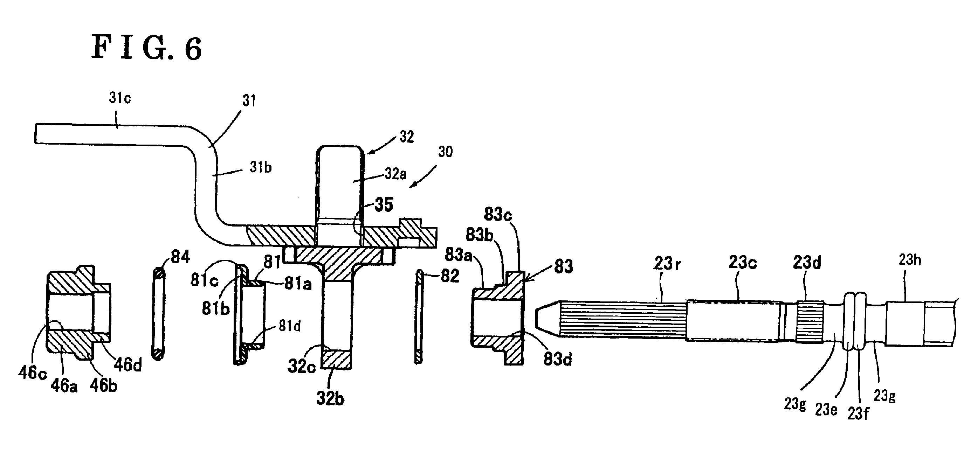

As illustrated in Figs. 5 and 6, the intermediate member 8 includes a slide intermediate member 80, which slides relative to the supporting portion 32b of the first bolt 32, and an elastic ring member 84. The engagement member 75, which is fixed to the screw shaft 23, is configured by the engagement body 83 and the fastening member 46 (the nut member).

The engagement body 83 for configuring the engagement member 75 is made of metal, and includes a second leg portion 83a, which extends in a thrusting direction (in the axial direction) of the screw shaft 23, an intermediate portion 83b, which is formed at a rear of the second leg portion 83a and includes a slightly larger diameter than the second leg portion 83b, a first flange portion 83c, which is formed at a rear of the intermediate portion 83b so as to be positioned at a rear of the supporting portion 32b of the first bolt 32 in a flange shape having a larger diameter than the intermediate portion 83b, and a shaft hole 83d, which is formed so as to extend through the second leg portion 83a, the intermediate portion 83b, and the first flange portion 83c and attached to the engagement portion 23d of the screw shaft 23. A front intermediate member 81 (described later) is arranged between an outer circumferential surface of the second leg portion 83a and the bearing hole 32c of the first bolt 32. An outer circumferential surface of the intermediate portion 83b is positioned so as to include a slight interval relative to a rear portion of an inner circumferential surface of the bearing hole 32c, and slides relative to an inner circumferential surface of a rear intermediate member 82 (described later). The rear intermediate member 82 is arranged between a front end surface of the first flange portion 83c and a rear end surface of the supporting portion 32b. The shaft hole 83d contacts the first raised portion 23e for configuring the protruding portion of the screw shaft 23, at the rear surface of the engagement body 83 in the vicinity of an opening of the shaft hole 83d, thereby determining a position of the shaft hole 83d.

The fastening nut 46 is arranged at the front portion of the screw shaft 23 so that the first bolt 32 is arranged between the fastening nut 46 and the rear intermediate member 82. The fastening nut 46 includes a third leg portion 46a, which extends in the axial direction of the screw shaft 23, a second flange portion 46b, which is formed at a rear of the third leg portion 46a so as to be arranged at a front of the supporting portion 32b and includes a lager diameter than that of the third leg portion 46a, a protruding end portion 46d, which is formed at a rear of the second flange portion 46b so as to extend in a rear direction and includes a smaller diameter than that of the second flange portion 46b, and a female screw portion 46c, which extends through the third leg portion 46a, the second flange portion 46b and the protruding end portion 46c in the axial direction of the screw shaft 23 so as to be screwed onto the fixing screw portion 23c of the screw shaft 23. An outer circumferential surface of the protruding end portion 46d forms the same plane as an outer circumferential surface of the second leg portion 83a of the engagement body 83, which is positioned at a rear of the fastening nut 46. A rear end surface of the fastening nut 46 contacts a front end surface of the engagement body 83.

The slide intermediate member 80 is configured by the front intermediate member 81 and the rear intermediate member 82. The front intermediate member 81 is a radial thrust member, made of resin. The front intermediate member 81 includes a cylindrical portion (a radial portion) 81 a, which is formed with a radial sliding surface at an outer circumferential surface thereof, a third flange portion (a thrust portion) 81 b, which is formed so as to extend radially outwardly from the cylindrical portion 81 a, formed with a thrust sliding surface at a rear end surface thereof, and includes a larger diameter than that of the cylindrical portion 81 a, and a hole portion 81 d, which extends through the cylindrical portion 81a and the third flange portion 81 b in the axial direction of the screw shaft 23. An inner circumferential surface of the cylindrical portion 81a contacts the outer circumferential surface of the protruding end portion 46d of the fastening nut 46 and the outer circumferential surface of the second leg portion 83a of the engagement body 83. Further, an outer circumferential surface of the cylindrical portion 46a contacts the inner circumferential surface of the bearing hole 32c.

The elastic ring member 84 is arranged between the front end surface of the third flange portion 81 b and the rear end surface of the second flange portion 46b. The elastic ring member 84, is formed into a substantially ring shape having a substantially circular-shaped cross-section, and is made of an elastic member, such as rubber, silicon, and the like, thereby having elasticity in the thrusting direction. A front end portion of the outer circumferential portion of the third flange portion 81 b is bent in the front direction, thereby forming a ring supporting portion 81 c for supporting the outer circumferential portion of the elastic ring member 84 so as to restrict a movement of the elastic ring member 84 in a radially outer direction. The front intermediate member 81 is thrust toward the supporting portion 32b by means of the elastic force of the elastic ring member 84 in the thrusting direction so that the rear end surface (the thrust slide surface) of the third flange portion 81 b of the front intermediate member 81 is moved toward the front end surface of the supporting portion 32b. Accordingly, the supporting portion 32b thrusts the rear intermediate member (a flat washer) 82 at the rear end surface of the supporting portion 32b so that the rear intermediate member 82 moves toward the first flange portion 83c of the engagement body 83.

The fastening nut 46 elastically thrusts the engagement body 83 toward the front end of the first raised portion 23e of the screw shaft 23 in the thrusting direction by means of the fastening force applied on the fixing screw portion 23c of the screw shaft 23 and the elastic force of the elastic ring member 84, thereby fixing the engagement body 35. The elastic ring member 84 offsets a dimension error and an assembly error, which may be generated at the screw shaft 23 and the front intermediate member 81.

Serration for restricting a rotation of the screw shaft 23 relative to the engagement body 83 about the axial direction of the screw shaft 23 is formed at an outer circumferential surface of the engagement portion 23d of the screw shaft 23. However, the serration may not be necessarily formed.

A portion of the holding bracket 31 corresponding to a front end of the upper rail 22 is bent in a substantially vertically upper direction so as to form a vertical bent portion 31b, and an end (an upper end) of the vertical bent portion 31 b is further orthogonally bent in the front direction so as to form a horizontal holding portion 31 c, which extends horizontally in the front direction. A gear box 51 is fixed to a lower surface of the horizontal holding portion 31 c by means of fastening members, such as bolts and the like.

The gear box 51, which is fixed to the lower surface of the horizontal holding portion 31 c of the holding bracket 31, includes a housing 52. As illustrated in Fig. 5, a worm wheel (a rotation outputting member) 53 is supported at the housing 52 so as to be rotatable coaxially with the screw shaft 23. A spline hole 53a is formed at a rotational central portion of the worm wheel 53. The spline engagement portion 23r, which is formed at the front end portion of the screw shaft 23, is spline-engaged with the spline hole 53a of the worm wheel 53. A worm shaft 54, which is formed with a worm for engaging with the worm wheel 53, is supported at the housing 52 so as to be rotatable about an axis extending orthogonally to the axis of the screw shaft 23 (i.e., a horizontal axis extending orthogonally to the front-rear direction of the vehicle). A rotational axis direction converting mechanism is configured by the worm wheel 53 and the worm shaft 54.

As illustrated in Fig. 2, a rotation transmitting shaft 55 is arranged between the gear boxes 51, which are arranged at left and right sides of the seat apparatus 10, respectively so as to extend in the left-right direction. As illustrated in Figs. 2 and 5, one end of the rotation transmitting shaft 55 is connected to the worm shaft 54, which is supported at the left gear box 51, and the other end of the rotation transmitting shaft 55 is connected to the worm shaft 54, which is supported at the right gear box 51. An output shaft of a motor 57 is rotatably connected to the rotation transmitting shaft 55 via a deceleration mechanism. The drive unit 25 is configured by the motor 57, the deceleration mechanism, the rotation transmitting shaft 55 and the rotational axis direction converting mechanism (the worm wheel 53, the worm shaft 54).

The bearing 33 for axially supporting the rear portion of the screw shaft 23 is made of resin. The bearing 33 includes the engagement hole 33a, into which the rear end portion of the upper rail 22 is inserted, a bearing portion 33b, into which the second shaft portion 23j formed at the rear end portion of the screw shaft 23 is inserted, and a protrusion 33c, which is formed so as to protrude inwardly from an inner wall of the bearing portion 33b. The engagement hole 33a is formed at an upper portion of the bearing 33. The engagement hole 33a extends in the left-right direction, and the rear end portion of the upper wall 22a of the upper rail 22 is inserted so that the bearing 33 is engaged therewith. Further, the second shaft portion 23j, formed at the rear end portion of the screw shaft 23, is inserted into the bearing portion 33b of the bearing 33 so as to be rotatably supported thereat.

As illustrated in Fig. 4, the protrusion 33c is formed at an entire inner circumferential surface of the inner wall of the bearing portion 33b so as to protrude inwardly toward an axis of the bearing portion 33b. The protrusion 33c, having an undercut, is formed in a manner where a resin-made mold is forced to be removed. In order to form the protrusion 33c, having an undercut, the protrusion 33c may be equally divided into several pieces in a circumferential direction of the bearing portion 33b.

A height of the protrusion 33c protruding from the inner wall of the bearing portion 33b is set so that a diameter of a circular shape, whose outer circumferential surface is defined by a top point of the protrusion 33c, is set to be smaller than a diameter of the second shaft portion 23j. The screw shaft 23 is thrust in the rear direction so that the protrusion 33c of the bearing 33 is snap-fitted to the second shaft portion 23j. Then, the screw shaft 23 is further thrust in the rear direction until the protrusion 33c reaches the second recessed portion 23n. When the protrusion 33c contacts a rear end surface of the fourth raised portion 23m, a position of the screw shaft 23 is determined thereat. The second shaft portion 23j, whose diameter is set to be larger than the diameter of the circular shape define by the top point of the protrusion 33, may restrict a release of the bearing 33 from the screw shaft 23. Consequently, the screw shaft 23, which is screwed through the transmitting nut member 24, is stably rotatably supported stably by the front intermediate member 81 and the bearing 33, which are arranged at the front and rear portions of the screw shaft 23, respectively.

An operation of the screw configuration of the seat apparatus 10 for the vehicle will be described hereinafter. In order to move the seat apparatus 10 in the front-rear direction, a switch, arranged in the vicinity of, for example, the seat apparatus 10, for moving a seat in the front or rear direction, is manually operated, thereby rotating the motor 57 in a forward or rearward direction. Then, the rotation transmitting shaft 55 is rotated in one direction and the other direction via the deceleration mechanism, and the rotation of the rotation transmitting shaft 55 is transmitted to the worm shafts 54, arranged in the gear boxes 51, to which both ends of the transmitting shaft 55 are respectively connected. When each of the worm shafts 54 is rotated, the worm wheel 53, serving as the rotation outputting member, is rotated, and the rotation of the worm wheel 53 is transmitted to the screw shaft 23 via the spline engagement portion 23r thereof. In this structure, the rotation of the motor 57 is transmitted via the rotation transmitting shaft 55, then the rotational axis direction is converted by means of the rotational axis direction converting mechanisms, configured by the worm shafts 54 and the worm wheels 53, thereby the left and right screw shafts 23 are synchronously rotated in a decelerated manner.

When the screw shaft 23 is rotated, the engagement member 75, which is fixed at the screw shaft 23, and the intermediate member 8 are rotated integrally with the screw shaft 23. Accordingly, the engagement member 75 and the intermediate member 8 integral with the screw shaft 23 are slidably rotated relative to the supporting portion 32b of the first bolt 32.

The screw shaft 23 is screwed through the transmitting nut member 24, which is fixed to the lower rail 21. Therefore, the screw shaft 23 is displaced relative to the transmitting nut member 24 in a rotating manner in the axial direction. In order to move the seat in the front direction, the first and second raised portions (recessed portions) 23e and 23f thrust the engagement body 83 of the engagement member 75, which is fixed with the screw shaft 23, in a state where the front end surface of the first raised portion 23e contacts the rear end surface of the engagement member 75. Then, the thrusting force is applied to the holding member 30 for rotatably holding the engagement member 75, and the upper rail 22, to which the holding member 30 is fixed, is moved in the front direction, thereby adjusting a position of the seat apparatus 10. Further, in order to move the seat in the rear direction, the fastening nut 46, by which the engagement member 75 is configured and which is fixed at the screw shaft 23, thrusts the elastic ring member 84 and the holding member 30 so as to move the upper rail 22 in the rear direction, thereby adjusting the position of the seat apparatus 10.

According to the embodiment, the first and second raised portions (the protruding portion) 23e and 23f are formed at the screw shaft 23. Accordingly, a diameter of the screw shaft 23 is set to be as small as possible in order to reduce size, while it is also required for the screw shaft 23 to bear a load applied to the screw shaft 23 from the upper rail 22 via the holding member 30 and the engagement member 75 at the time of, for example, a movement of the seat in the front direction. In a case where a material, having a large diameter, is processed so as to form a screw shaft, having a small diameter, an amount of waste of the material and a processing time may be increased. Therefore, a material, having a small diameter, is used in the embodiment.

The engagement member 75, which is supported by the holding member 30, is sufficiently fixed to the screw shaft 23. In other words, a strength of the screw shaft 23 may be required in order to support the engagement member 75, which is inserted from an end portion of the screw shaft 23, at a predetermined position so as to determine the position of the engagement member 75, and to tolerate a fastening load caused by a screwing of the fastening nut 46. Therefore, according to the embodiment, the protruding portion 23e and 23f, with which the engagement member 75 is engaged, are formed at the screw shaft 23 integrally therewith by cold rolling so as to be raised in a protruding manner and so as to be coupled and to contact each other. More specifically, an outer circumferential portion of the screw shaft 23 is plastically deformed in a manner where a cold rolling die is applied to the screw shaft 23 so as to gather the outer circumferential portion of the screw shaft 23 to be raised from front and rear sides thereof in the axial direction toward portions to be formed with the first and second raised portions 23e and 23f while the screw shaft 23 is rotated by the cold rolling die, thereby forming the first and second raised portions 23e and 23f so as to be coupled and so as to contact each other in the axial direction..

Thus, the screw shaft 23 is raised so as to form the first and second raised portions 23e and 23f. Therefore, a load receiving portion, having lager diameter than a material, is formed. Accordingly, a load receiving surface is formed, which contacts the rear surface of the engagement body 83 in the vicinity of the opening of the shaft hole 83d, the engagement body 83 configuring the engagement member 75 inserted from the end portion of the screw shaft 23. Further, the first and second raised portions 23e and 23f are coupled so as to contact each other. Therefore, the screw shaft 23 may include a sufficient strength in the axial direction to tolerate a shear stress of the screw shaft 23.

The first and second raised portions 23e and 23f are formed by cold rolling. Therefore, the screw shaft 23 may not be deformed and strength of the screw shaft 23 may not be reduced due to heating. Accordingly, even when the diameter of the material is small, the engagement member 75 is sufficiently fixed to the screw shaft 23. Further, the first and second raised portions 23e and 23f are coupled so as to contact each other. Therefore, even when loads are applied to the screw shaft 23, the screw shaft 23 includes a sufficient strength in the axial direction to a shear stress of the screw shaft 23. Accordingly, the first and second raised portions 23e and 23f may not be damaged.

The diameter Db of the bottom surface portion of the first recessed portions 23g, formed at the front and rear of the first and second raised portions 23e and 23f, respectively, is set to be equal to or larger than the root diameter Dv of the transmitting screw portion 23a. Therefore, the first recessed portions 23g may not be a weakest portion in the screw shaft 23.

The bearing 33 for axially supporting the second shaft portion 23j, formed at the rear end portion of the screw shaft 23, determines the position of the screw shaft 23 when a front end surface of the protrusion 33c contacts the rear end surface of the fourth raised portion 23m, formed at the screw shaft 23. Further, the protrusion 33c of the bearing 33 is engaged with the second recessed portion 23n, whose diameter is smaller than that of the second shaft portion 23j, formed at the rear end portion of the screw shaft 23, and the fourth raised portion 23m. Therefore, the bearing 33 may not be released from the screw shaft 23 in a normal operating condition.

As described above, according to the embodiment, the first and second raised portions (the protruding portion) 23e and 23f and the third and fourth raised portions (the protruding portion) 23k and 23m are formed at the front and rear portions of the screw shaft 23, respectively, on the outer circumferential surface of the screw shaft 23 integrally therewith so as to be coupled and so as to contact each other. Thus, the protruding portion 23e, 23f, 23k and 23m for determining the position of the screw shaft 23 is formed in a simple configuration. Therefore, a manufacturing cost may be reduced. Further, the protruding portions 23e, 23f, 23k and 23m are formed by cold (normal temperature) rolling. Therefore, the screw shaft 23 may not be deformed and strength of the screw shaft 23 may not be reduced due to heating. Accordingly, the screw shaft 23 may sufficiently tolerate a force relative to the axial direction, applied to the screw shaft 23, whose position in the axial direction is determined by means of the protruding portions 23e, 23f, 23k and 23m.

According to the seat apparatus 10 of the embodiment, the screw shaft 23 is screwed through the transmitting nut member 24, fixed to the lower rail 21. The engagement member 75, fixed at the screw shaft 23, contacts the first and second raised portions (the protruding portion) 23e and 23f, formed to be raised from the screw shaft 23, and is supported at a position between the holding member 30, fixed to the upper rail 22, and the first and second raised portions 23e and 23f. Loads may be applied to the engagement member 75 from the holding member 30, which is fixed to the upper rail 22 for supporting the vehicle seat. The loads are transmitted to the protruding portion 23e and 23f of the screw shaft 23 via the holding member 30 and the engagement member 75. However, the first and second raised portions (the protruding portion) 23e and 23f are formed to be integrally coupled. Therefore, the first and second raised portions (the protruding portion) 23e and 23f include a large modulus of section relative to the shear stress in the axial direction of the screw shaft 23. Accordingly, a load receiving portion for receiving a large load may be provided in a simple configuration without adding an additional component.

Further, according to the embodiment, the third and fourth raised portions 23k and 23m and the second recessed portions 23n (the protruding portion and the recessed portion, provided at the rear end portion of the screw shaft 23), the first and second raised portions 23e and 23f and the first recessed portions 23g (the protruding portion and recessed portion, provided at the front end portion of the screw shaft 23), the transmitting screw portion 23a, which is formed at one side of the protruding portion, provided at the front end portion of the screw shaft 23, and screwed through the transmitting nut member 24, and the fixing screw portion 23c, which is formed at the other side of the protruding portion and screwed thorough the fastening nut 46 for thrusting the engagement member 75 to contact the protruding portion, are formed by cold rolling. Accordingly, a plurality of main portions of the screw shaft 23 may be formed in a series of processes, thereby reducing a cost for manufacturing. According to the embodiment. each of the third and fourth raised portions 23k, 23m, the second recessed portions 23n, the first and second raised portions 23e and 23f, the first recessed portions 23g, the transmitting screw portion 23a and the fixing screw portion 23c are formed by cold rolling. However, the rolling may not be operated at a cold temperature. Alternatively, a warm rolling or a hot rolling may be operated as long as a temperature is set so as not to cause a reduction of strength of a material and a deformation of the material even when the material is heated.

Still further, according to the embodiment, the diameter Db of the first recessed portions 23g, formed at both sides of the first and second raised portions 23e and 23f, respectively, is set to be equal to or larger than the root diameter Dv of the transmitting screw portion 23a, formed at the screw shaft 23. Therefore, a diameter of a portion, applied with a large stress (corresponding to a known key groove portion) is not set to be smaller than the root diameter Dv of the transmitting screw portion 23a. Therefore, strength of the screw shaft 23 may be sufficiently obtained while a weight of the screw shaft 23 may be reduced.

According to the embodiment, the screw shaft 23 is fixed with the upper rail 22 and screwed through the transmitting nut member 24, fixed at the lower rail 21. Accordingly, when the motor 57 is operated so as to rotate the screw shaft 23, the screw shaft 23 is moved in the front-rear direction relative to the transmitting nut member 24, thereby the seat is moved by means of the holding member 30, fixed to the upper rail 22. Alternatively a following configuration may be applied. A nut member, which is configured so as to be rotated by means of a motor, is fixed to an upper rail. A screw shaft, which is non-rotatably fixed at a lower rail fixed to a floor, is screwed through the nut member. The nut member is moved in a front-rear direction integrally with the upper rail and a seat, in response to a rotation of the motor. In order to restrict the movement of the nut member, the upper rail and the seat, first and second raised portions and third and fourth raised portions, serving as protruding portions, are respectively formed at front and rear portions of a shaft portion of the screw shaft, fixed to the lower rail, by cold rolling integrally with the screw shaft so as to be raised in a protruding manner and so as to be coupled and so as to contact each other. The movement of the nut member together with the upper rail and the seat is stopped at a stopping portion where a contacting portion of the nut member and an end portion of the raised portions contact each other. Accordingly, effects similar to the above-described embodiment may be obtained.

According to the embodiment, the elastic ring member 84 and the front intermediate member 81 for holding the elastic ring member 84 are arranged at the front of the supporting portion 32b, and the rear intermediate portion 82 is arranged at the rear of the supporting portion 32b. Alternatively, the rear intermediate portion 82 may be arranged at the front of the supporting portion 32b, and the elastic ring member 84 and the front intermediate member 81 for holding the elastic ring member 84 may be arranged at the rear of the supporting portion 32b. Further, the elastic ring member and the front intermediate member 81 for holding the elastic ring member 84 may not be arranged only at the front of the supporting portion 32b but arranged also at the rear of the supporting portion 32b, and the rear intermediate portion 82 may not be provided.

## Claims

1. A screw configuration of a seat apparatus (10) for a vehicle comprising:
a screw member (23) axially rotatably supported at an upper rail (22) slidably supported at a lower rail (21) adapted to be mounted on a floor of the vehicle and adapted to support a seat for the vehicle, extending in a sliding direction of the upper rail (22), including a protruding portion configured by two raised portions (23e, 23f, 23k, 23m) formed to be raised at an outer circumferential surface of the screw member (23) from both sides in an axial direction of the screw member (23),
a transmitting nut member (24) fixed to the lower rail (21) so that the screw member (23) is screwed through the transmitting nut member (24),
**characterized in that** the raised portions (23e, 23f, 23k, 23m) are formed by cold rolling so as to be coupled and to contact each other, and positioned in the axial direction of the screw member (23) by means of the protruding portion; **in that**
a holding member (30) is fixed to the upper rail (22), and an engagement member (75) is rotatably held by the holding member (30), and **in that**
the engagement member (75) is fixed to the screw member (23) in a state where the screw member (23) is positioned in the axial direction at a position where the protruding portion contacts an end surface of the engagement member (75).

2. The screw configuration of the seat apparatus (10) for the vehicle, according to claim 1, wherein
the screw member (23) includes a transmitting screw portion (23a) formed at one side of the two raised portions (23e, 23f) by cold rolling and screwed through the transmitting nut member (24), and a fixing screw portion (23c) formed at the other side of the two raised portions (23e, 23f) by cold rolling and screwed through a nut member (46) for thrusting the engagement member (75) to contact the protruding portion.

3. The screw configuration of the seat apparatus (10) for the vehicle, according to claim 2, wherein
a diameter (Db) of recessed portions (23g), formed at both sides of the two raised portions (23e, 23f) so as to raise the two raised portions (23e, 23f) by cold rolling, is set to be equal to or larger than a root diameter (Dv) of the transmitting screw portion (23a), formed at the screw member (23) by cold rolling.

## Patentansprüche

1. Schraubenanordnung für eine Sitzvorrichtung (10) für ein Fahrzeug, umfassend:
ein Schraubenelement (23), das axial drehbar an einer oberen Schiene (22) gestützt ist, die gleitend an einer unteren Schiene (21) gestützt ist, die dazu ausgelegt ist auf einem Boden des Fahrzeuges befestigt zu sein und dazu ausgelegt ist, einen Sitz für das Fahrzeug zu tragen, der sich in einer Schieberichtung der oberen Schiene (22) erstreckt, umfassend einen vorspringenden Abschnitt, der durch zwei erhabene Abschnitte (23e, 23f, 23k, 23m) konfiguriert ist, die so gebildet sind, daß sie an einer äußeren Umfangsoberfläche des Schraubenelementes (23) an beiden Seiten in einer Axialrichtung des Schraubenelementes (23) erhaben sind,
ein Übertragungsmutterelement (24), das an der unteren Schiene (21) befestigt ist, so daß das Schraubenelement (23) durch das Übertragungsmutterelement geschraubt ist,
**dadurch gekennzeichnet, daß** die erhabenen Abschnitte (23e, 23f, 23k, 23m) durch Kaltwalzen so ausgebildet sind, daß sie miteinander gekoppelt sind und einander berühren, und in der Axialrichtung des Schraubenelementes (23) mittels des vorspringenden Abschnittes angeordnet sind, daß
ein Haltelement (30) an der oberen Schiene (22) befestigt ist und ein Eingriffselement (75) drehbar durch das Haltelement (30) gehalten ist, und daß
das Eingriffselement (75) an dem Schraubenelement (23) befestigt ist in einem Zustand, in dem das Schraubenelement (23) in der Axialrichtung an einer Position angeordnet ist, in der der vorspringende Abschnitt eine Endoberfläche des Eingriffselements (75) berührt.

2. Schraubenanordnung für die Sitzvorrichtung (10) für das Fahrzeug nach Anspruch 1, wobei
das Schraubenelement (23) einen Übertragungsschraubenabschnitt (23a) umfaßt, der an einer Seite der beiden erhabenen Abschnitte (23e, 23f) durch Kaltwalzen ausgebildet ist und durch das Übertragungsmutterelement (24) geschraubt ist, und ein Befestigungsschraubenabschnitt (23c), der an der anderen Seite der beiden erhabenen Abschnitte (23e, 23f) durch Kaltwalzen ausgebildet ist und durch ein Mutterelement (46) zum Durchstoßen des Eingriffselementes (75) geschraubt ist, um den vorspringenden Abschnitt zu konfigurieren.

3. Schraubenanordnung für die Sitzvorrichtung (10) für das Fahrzeug nach Anspruch 2, wobei ein Durchmesser (Db) der vertieften Abschnitte (23g), die an beiden Seiten der beiden erhabenen Abschnitte (23e, 23f) ausgebildet sind, um die zwei erhabenen Abschnitte (23e, 23f) durch Kaltwalzen zu erheben, so eingestellt ist, daß er gleich oder größer als ein Kerndurchmesser (Dv) des Übertragungsschraubenabschnittes (23a) ist, der an dem Schraubenelement (23) durch Kaltwalzen ausgebildet ist.

## Revendications

1. Configuration de vis d'un siège (10) pour véhicule comportant :
un élément de vis (23) supporté de façon axialement rotative sur un rail supérieur (22) supporté de façon coulissante sur un rail inférieur (21) prévu pour être monté sur un plancher du véhicule et prévu pour supporter un siège pour le véhicule, s'étendant dans une direction de coulissement du rail supérieur (22), comprenant une partie saillante configurée par deux parties relevées (23e, 23f, 23k, 23m) formées de façon à être relevées au niveau d'une surface circonférentielle externe de l'élément de vis (23) des deux côtés dans une direction axiale de l'élément de vis (23),
un élément d'écrou de transmission (24) fixé sur le rail inférieur (21) de telle sorte que l'élément de vis (23) est vissé par l'intermédiaire de l'élément d'écrou de transmission (24),
**caractérisée en ce que** les parties relevées (23e, 23f, 23k, 23m) sont formées par laminage à froid de façon à être couplées et en contact l'une avec l'autre, et positionnées dans la direction axiale de l'élément de vis (23) au moyen de la partie saillante ; **en ce que**
un élément de maintien (30) est fixé sur le rail supérieur (22), et un élément d'engagement (75) est maintenu de façon rotative par l'élément de maintien (30), et **en ce que**
l'élément d'engagement (75) est fixé sur l'élément de vis (23) dans un état où l'élément de vis (23) est positionné dans la direction axiale dans une position où la partie saillante est en contact avec une surface d'extrémité de l'élément d'engagement (75).

2. Configuration de vis du siège (10) pour véhicule, selon la revendication 1, dans laquelle
l'élément de vis (23) comprend une partie de vis de transmission (23a) formée sur un côté des deux parties relevées (23e, 23f) par laminage à froid et vissée dans l'élément d'écrou de transmission (24), et une partie de vis de fixation (23c) formée sur l'autre côté des deux parties relevées (23e, 23f) par le laminage à froid et vissée dans un élément d'écrou (46) afin de pousser l'élément d'engagement (75) pour entrer en contact avec la partie saillante.

3. Configuration de vis du siège (10) pour véhicule, selon la revendication 2, dans laquelle
un diamètre (Dd) de parties renfoncées (23g), formées sur les deux côtés des deux parties relevées (23e, 23f) de façon à relever les deux parties relevées (23e, 23f) par laminage à froid, est prévu pour être égal ou supérieur à un diamètre de noyau (Dv) de la partie de vis de transmission (23a), formée au niveau de l'élément de vis (23) par laminage à froid.
